# EUROPEAN PATENT SPECIFICATION

(11) **EP 2 900 938 B1**
(45) Date of publication and mention of the grant of the patent: **13.05.2020**
(21) Application number: 13840783.8
(22) Date of filing: 27.09.2013
(51) Int. Cl.: F01D 25/24, F02C 7/00, F16B 33/00, F02K 3/00

(54) **WRENCHING MECHANISM**
SCHLÜSSELMECHANISMUS
MÉCANISME DE SERRAGE

(30) Priority: 28.09.2012 US 201213630015
(43) Date of publication of application: 05.08.2015
(73) Proprietor: United Technologies Corporation, Farmington, CT 06032 (US)
(72) Inventor: MATTIA, Stephen H., Middletown, Connecticut 06457 (US); HETHERINGTON, Curt R., Newington, Connecticut 06111 (US)
(74) Representative: Dehns
(86) International application number: PCT/US2013/062197
(87) International publication number: WO 2014/052765

(56) References cited:
- US-A- 4 193 435
- US-A- 5 232 323
- US-A- 5 336 044
- US-A- 5 542 777
- US-A1- 2006 222 473
- US-A1- 2009 103 997
- US-A1- 2009 103 997
- US-B2- 7 121 758

## Description

### BACKGROUND

The present disclosure relates to a wrenching mechanism and, more particularly, to a floating fastener assembly.

In gas turbine engines and other complex structures, lack of access may require a wrenching mechanism to facilitate blind assembly. Moreover, due to cumulative tolerances, the fasteners must float to meet the position of each bolt upon passing through the assembly. Typically, such a need is fulfilled in current / legacy engine designs by a nut plate.

US 5232323 discloses a prior art wrenching mechanism in accordance with the preamble of claim 1.

US 4193435 discloses a prior art nut retention system.

US 2009/0103997 discloses a prior art apparatus for securing a fastener.

### SUMMARY

According to the invention, there is provided a wrenching mechanism as set forth in claim 1.

In an embodiment of the foregoing embodiment, the fastener is a nut. Additionally thereto, in the foregoing embodiment the fastener is a twelve point fastener.

In a further embodiment of any of the foregoing embodiments, each of the multiple of rectilinear fastener plates includes a radiused corner.

In a further embodiment of any of the foregoing embodiments, each of the multiple of rectilinear fastener plates floats within a respective one of said multiple of rectilinear openings.

In a further embodiment of any of the foregoing embodiments, the second face sheet receives a rivet accessible through at least one of said multiple of housing lightening openings and a respective one of said multiple of first sheet lightening openings.

There is further provided a method of attaching a wrenching mechanism to a case of a gas turbine engine as set forth in claim 7.

In an embodiment of the foregoing embodiment, the method includes attaching a structure to the case with a fastener mounted to a nut at least partially contained within the housing. Additionally thereto, the foregoing embodiment includes threading the fastener into the nut and restraining the nut by a rectilinear fastener plate engaged with the nut and a rectilinear opening in the housing. Further additionally thereto, the foregoing embodiment includes trapping the rectilinear fastener plate and the nut within the rectilinear opening in the housing with the face sheet.

In a further embodiment of any of the foregoing embodiments, the method includes locating at least one of the multiple of housing lightening openings adjacent to the rectilinear opening in the housing.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is an enlarged schematic cross-section of the gas turbine engine showing the Fan Intermediate Case;
Figure 3 is an enlarged perspective view of the Fan Intermediate Case;
Figure 4 is an exploded view of a wrenching mechanism according to one disclosed-non-limiting embodiment;
Figure 5 is a perspective view of the wrenching mechanism;
Figure 6 is a sectional view of the wrenching mechanism taken along line 6-6 in Figure 5;
Figure 7 is an inner view of a single fastener mounted within the wrenching mechanism in an unwrenched position;
Figure 8 is an inner view of the single fastener of Figure 7 in a wrenched position; and
Figure 9 is a block diagram illustrating the steps of a method of attaching the wrenching mechanism to a case of a gas turbine engine.

### DETAILED DESCRIPTION

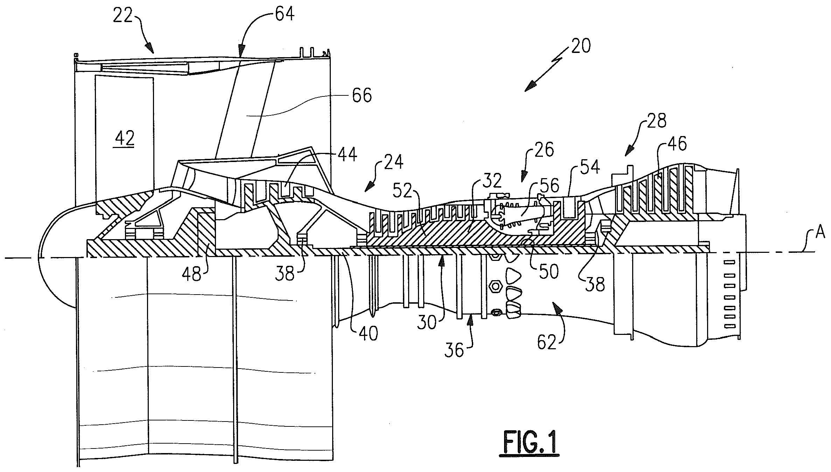

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines such as a three-spool (plus fan) engine wherein an intermediate spool includes an intermediate pressure compressor (IPC) between the LPC and HPC and an intermediate pressure turbine (IPT) between the HPT and LPT.

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor 44 ("LPC") and a low pressure turbine 46 ("LPT"). The inner shaft 40 drives the fan 42 through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor 52 ("HPC") and high pressure turbine 54 ("HPT"). A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the low pressure compressor 44 then the high pressure compressor 52, mixed with the fuel and burned in the combustor 56, then expanded over the high pressure turbine 54 and low pressure turbine 46. The turbines 54, 46 rotationally drive the respective low spool 30 and high spool 32 in response to the expansion.

The main engine shafts 40, 50 are supported at a plurality of points by bearing structures 38 within the static structure 36. In one non-limiting embodiment, bearing structures 38 includes a # 1 bearing structure 38-1 located radially inboard of the fan section 22.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the low pressure compressor 44 and low pressure turbine 46 and render increased pressure in a fewer number of stages.

A pressure ratio associated with the low pressure turbine 46 is pressure measured prior to the inlet of the low pressure turbine 46 as related to the pressure at the outlet of the low pressure turbine 46 prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 44, and the low pressure turbine 46 has a pressure ratio that is greater than about 5 (5:1). It should be understood, however, that the above parameters are only exemplary of one embodiment of a geared architecture engine and that the present disclosure is applicable to other gas turbine engines including direct drive turbofans.

In one embodiment, a significant amount of thrust is provided by the bypass flow path B due to the high bypass ratio. The fan section 22 of the gas turbine engine 20 is designed for a particular flight condition - typically cruise at about 0.8 Mach and about 35,000 feet. This flight condition, with the gas turbine engine 20 at its best fuel consumption, is also known as bucket cruise. Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of "T" / 518.7^{0.5} in which "T" represents the ambient temperature in degrees Rankine. The Low Corrected Fan Tip Speed according to one non-limiting embodiment of the example gas turbine engine 20 is less than about 1150 fps (351 m/s).

The engine static structure 36 proximate the compressor section 24 generally includes a Fan Intermediate Case (FIC) 60 - also often referred to as a Front Center Body (FCB) - which interconnects a core case structure 62 with a fan case structure 64 through a multiple of Structural Guide Vanes (SGVs) 66 (Figure 1). It should be appreciated that various case structures may alternatively or additionally be provided, yet benefit from the architecture described herein.

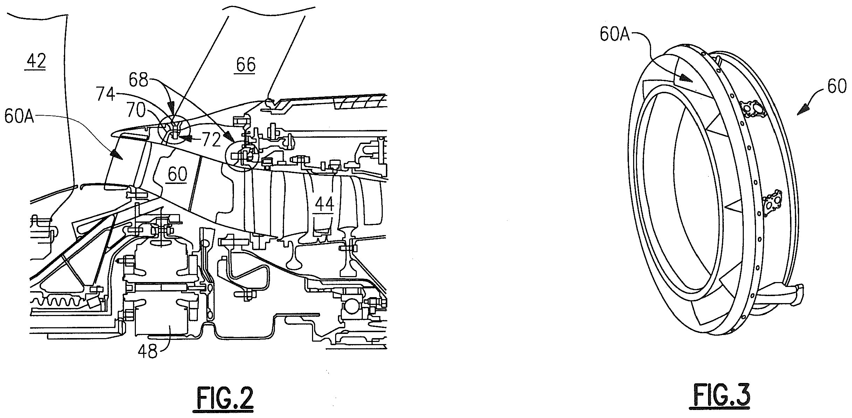

With reference to Figure 2, the Fan Intermediate Case 60 (also shown in Figure 3) generally includes an annular core flow path 60A for the core airflow into the low pressure compressor 44 and an annular bypass flow path from the fan 42. The FIC 60 also supports the SGVs 66 at a maintainability interface 68 with a flange 70 and a wrenching mechanism 72. The maintainability interface 68 facilitates on-wing removal of the fan 42 and the geared architecture 48 via externally accessible, radial oriented fasteners 74 which engage the wrenching mechanism 72 at a blind interface without wrench access. While applied to an aerospace assembly in the disclosed, non-limiting embodiment, the wrenching mechanism 72 may be used in any assembly application where blind assembly may be required, space may be limited, and where a standard nut plate may not be readily available.

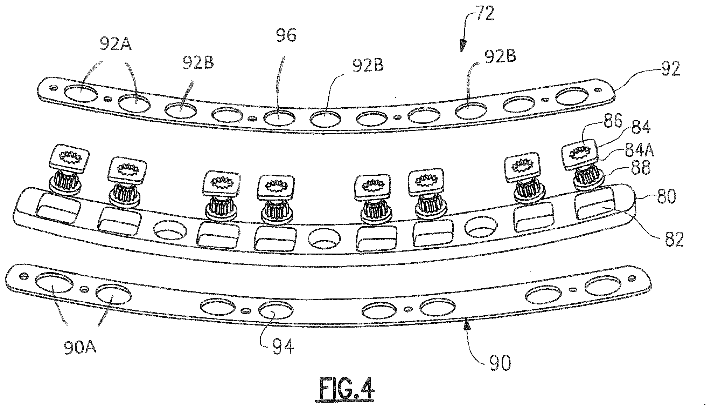

With reference to Figure 4, the wrenching mechanism 72 generally includes a housing 80 with a multiple of rectilinear openings 82, a multiple of rectilinear fastener plates 84 each with a nut-shaped opening 86, a multiple of nuts 88, and a first and second face sheet 92, 90. The wrenching mechanism 72 serves as a floating wrenching mechanism for standard nuts 88 such as the twelve (12) point double hex nut pattern, can be scaled to different sizes or patterns (hex, square, etc.) based on the need.

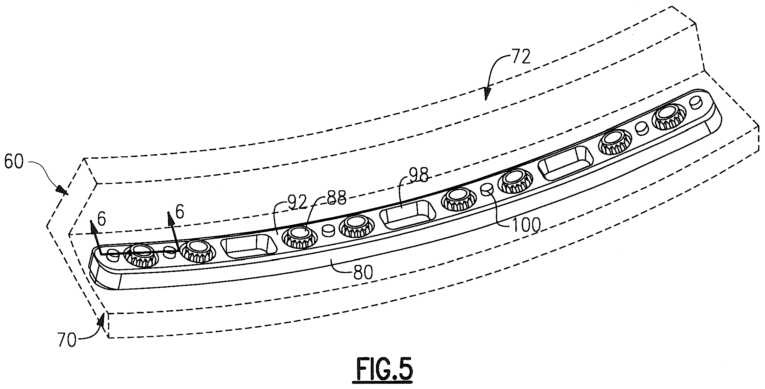

The multiple of rectilinear openings 82 within the housing 80 and the multiple of openings 94, 96 within the respective first and second face sheet 92, 90 may be manufactured from readily available sheet metal materials via laser cut flat patterns but readily applicable to stamping, water jetting, or similar processes for mass production. The first and second face sheet 92, 90 and the housing 80 may define an arcuate or other shape to conform to each other as well as a component to which they are mounted such as the FIC 60 (Figure 5). The housing 80 includes a multiple of housing lightening openings 98 and may be manufactured of relatively lightweight materials such as aluminum alloys and composites. Moreover, the first and second face sheet 92, 90 and the housing 80 may be manufactured of composite materials and bonded together.

The first and second face sheet 92, 90 include a respective multiple of first and second face sheet fastener openings 92A, 90A. The first face sheet 92 also includes a multiple of first face sheet lightening openings 92B that are aligned with the multiple of housing lightening openings 98. The multiple of first face sheet lightening openings 92B and the multiple of housing lightening openings 98 may be rectilinear and/or of other shapes.

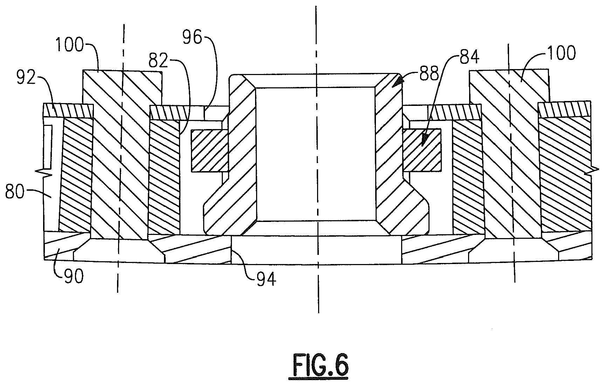

The first and second face sheet 92, 90 trap one of the rectilinear fastener plates 84 and one nuts 88 within each of the respective multiple of rectilinear openings 82 (Figure 6). Each of the rectilinear fastener plates 84 may include radiused corners 84A to facilitate movement of the rectilinear fastener plates 84 within the respective multiple of rectilinear openings 82 as well as minimize the likelihood of the rectilinear fastener plates 84 from "digging-in" to the housing 80. The wrenching mechanism 72 operates as a nut plate which utilizes readily available loose nut fasteners - such as the ST2785 class - without the potential lead times associated with relatively specialized nut plate fastener production or uncommon materials.

With reference to Figure 5, the first and second face sheet 92, 90 are mounted to the housing 80 via rivets 100 in the disclosed non-limiting embodiment. The rivets 100 are counter sunk into the first face sheet 92 to facilitate flush attachment of the wrenching mechanism 72 to the FIC the (illustrated schematically in Figure 5). Additionally, or in the alternatively, the first and second face sheet 92, 90 may be welded, pined or otherwise mounted to the housing 80.

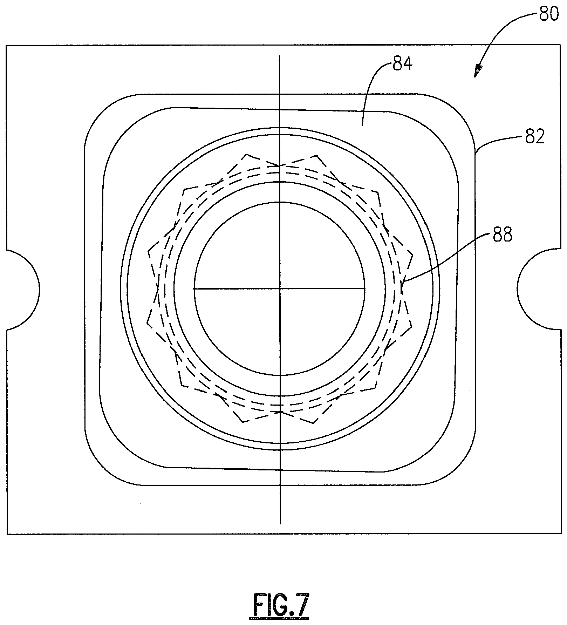

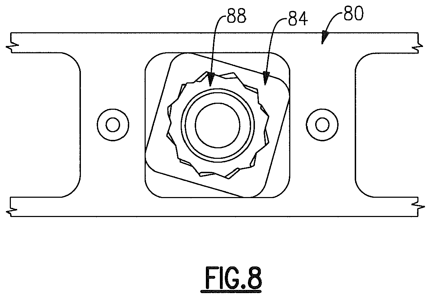

In operation, the rectilinear fastener plates 84 float within the rectilinear openings 82 of the housing 80 (Figure 7) between the first and second face sheet 92, 90 to accommodate tolerances between, for example, the geared architecture 48 and the FIC 60 with fasteners 74. When each of the fasteners 74 are threaded into one of the respective nuts 88 of the wrenching mechanism 72, the rectilinear fastener plates 84 are rotated into engagement with the rectilinear openings 82 to provide a wrenching principle for blind assembly (Figure 8). That is, the rectilinear openings 82 stop rotation of the rectilinear fastener plates 84 which stop rotation of the nuts 88 which closely fit within the nut-shaped opening 86 of the rectilinear fastener plates 84. It should be understood that the nut-shaped opening 86 may be scaled for different sized nut diameters and different wrenching patterns, e.g., 12-point, hexagonal, square, etc.

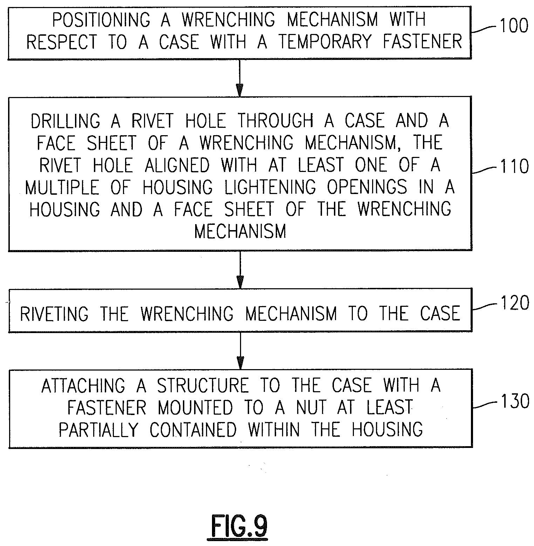

With Reference to Figure 9, a method of assembling an engine case such as the FIC 60 is disclosed in terms of functional block diagrams. Initially, the wrenching mechanism 72 is mouthed with respect to the FIC 60 with temporary fasteners such as plastic bolts to properly position the wrenching mechanism 72 to the case (Step 100). It should be understood that various numbers of temporary fasteners may be utilized to assure a desired positional tolerance. A rivet hole is then drilled through the FIC 60 and the wrenching mechanism 72 in a position to locate the rivet hole in alignment with at least one of the multiple of housing lightening openings 98 and one of the second face sheet lightening openings 92B (step 110). The wrenching mechanism 72 is then riveted to the FIC 60 (step 120). A structure may then be attached to the FIC 60 with fasteners 74 that engage the wrenching mechanism 72 (step 130).

It should be understood that like reference numerals identify corresponding or similar elements throughout the several drawings. It should also be understood that although a particular component arrangement is disclosed in the illustrated embodiment, other arrangements will benefit herefrom.

Although the different examples have specific components shown in the illustrations, embodiments of this invention are not limited to those particular combinations. It is possible to use some of the components or features from one of the examples in combination with features or components from another one of the examples.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason the appended claims should be studied to determine true scope and content.

## Claims

1. A wrenching mechanism (72) comprising:
a housing (80) with a multiple of rectilinear openings (82);
a multiple of rectilinear fastener plates (84) each with a nut-shaped opening (86), each of said multiple of rectilinear fastener plates (84) located within one of said multiple of rectilinear openings (82); and
a fastener (88) mounted at least partially through said nut-shaped opening (86) of each of said multiple of rectilinear fastener plates (84);
**characterised by** further comprising:
a first face sheet (92) and a second face sheet (90) mounted to said housing (80) to trap each of said multiple of rectilinear fastener plates (84) therebetween; and
a multiple of housing lightening openings (98) through said housing (80) and a multiple of first sheet lightening openings through said first face sheet (92), said multiple of housing lightening openings (98) aligned with said multiple of first sheet lightening openings.

2. The wrenching mechanism as recited in claim 1, wherein said fastener (88) is a nut.

3. The wrenching mechanism as recited in claim 2, wherein said fastener (88) is a twelve point fastener.

4. The wrenching mechanism as recited in any preceding claim, wherein each of said multiple of rectilinear fastener plates (84) includes a radiused corner (84A).

5. The wrenching mechanism as recited in any preceding claim, wherein each of said multiple of rectilinear fastener plates (84) floats within a respective one of said multiple of rectilinear openings (82).

6. The wrenching mechanism as recited in any preceding claim, wherein said second face sheet (90) receives a rivet (100) accessible through at least one of said multiple of housing lightening openings (98) and a respective one of said multiple of first sheet lightening openings.

7. A method of attaching a wrenching mechanism (72) to a case (60) of a gas turbine engine comprising:
positioning a wrenching mechanism (72) with respect to a case (60) with a temporary fastener;
drilling a rivet hole through the case (60) and a face sheet (90) mounted to a housing (80) of the wrenching mechanism (72) and to the case (60), the rivet hole aligned with at least one of a multiple of housing lightening openings (98); and
riveting the wrenching mechanism (72) to the case (60).

8. The method as recited in claim 7, further comprising:
attaching a structure to the case (60) with a fastener (74) mounted to a nut (88) at least partially contained within the housing (80).

9. The method as recited in claim 8, further comprising:
threading the fastener (74) into the nut (88); and
restraining the nut by a rectilinear fastener plate (84) engaged with the nut (88) and a rectilinear opening (82) in the housing (80).

10. The method as recited in claim 9, further comprising:
trapping the rectilinear fastener plate (84) and the nut (88) within the rectilinear opening (82) in the housing (80) with the face sheet (90).

11. The method as recited in claim 9 or 10, further comprising:
locating at least one of the multiple of housing lightening openings (98) adjacent to the rectilinear opening (82) in the housing (80).

## Patentansprüche

1. Schlüsselmechanismus (72), umfassend:
ein Gehäuse (80) mit einer Vielzahl von geradlinigen Öffnungen (82) ;
eine Vielzahl von geradlinigen Halterungsplatten (84), die jeweils eine mutterförmige Öffnung (86) aufweisen, wobei jede aus der Vielzahl von geradlinigen Halterungsplatten (84) innerhalb einer aus der Vielzahl von geradlinigen Öffnungen (82) angeordnet ist; und
eine Halterung (88), die mindestens teilweise durch die mutterförmige Öffnung (86) jeder aus der Vielzahl von geradlinigen Halterungsplatten (84) angebracht ist;
**dadurch gekennzeichnet, dass** er ferner Folgendes umfasst:
ein erstes Deckblech (92) und ein zweites Deckblech (90), die an dem Gehäuse (80) angebracht sind, um jede aus der Vielzahl von geradlinigen Halterungsplatten (84) dazwischen festzuhalten; und
eine Vielzahl von Gehäuseerleichterungsöffnungen (98) durch das Gehäuse (80) und eine Vielzahl von ersten Blecherleichterungsöffnungen durch das erste Deckblech (92), wobei die Vielzahl von Gehäuseerleichterungsöffnungen (98) auf die Vielzahl von ersten Blecherleichterungsöffnungen ausgerichtet ist.

2. Schlüsselmechanismus nach Anspruch 1, wobei die Halterung (88) eine Mutter ist.

3. Schlüsselmechanismus nach Anspruch 2, wobei die Halterung (88) eine Zwölfkanthalterung ist.

4. Schlüsselmechanismus nach einem der vorstehenden Ansprüche, wobei jede aus der Vielzahl von geradlinigen Halterungsplatten (84) eine abgerundete Ecke (84A) beinhaltet.

5. Schlüsselmechanismus nach einem der vorstehenden Ansprüche, wobei jede aus der Vielzahl von geradlinigen Halterungsplatten (84) innerhalb einer entsprechenden aus der Vielzahl von geradlinigen Öffnungen (82) schwimmt.

6. Schlüsselmechanismus nach einem der vorstehenden Ansprüche, wobei das zweite Deckblech (90) eine Niete (100) aufnimmt, auf die durch mindestens eine aus der Vielzahl von Gehäuseerleichterungsöffnungen (98) und eine entsprechende aus der Vielzahl von ersten Blecherleichterungsöffnungen zugegriffen werden kann.

7. Verfahren zum Anbringen eines Schlüsselmechanismus (72) an einem Mantel (60) eines Gasturbinenmotors, umfassend:
Positionieren eines Schlüsselmechanismus (72) in Bezug auf einen Mantel (60) mit einer vorübergehenden Halterung;
Bohren eines Nietlochs durch den Mantel (60) und ein Deckblech (90), das an einem Gehäuse (80) des Schlüsselmechanismus (72) und an dem Mantel (60) angebracht ist, wobei das Nietloch auf mindestens eine aus einer Vielzahl von Gehäuseerleichterungsöffnungen (98) ausgerichtet ist; und
Nieten des Schlüsselmechanismus (72) an den Mantel (60).

8. Verfahren nach Anspruch 7, ferner umfassend:
Befestigen einer Struktur an dem Mantel (60) mit einer Halterung (74), die an einer Mutter (88) angebracht ist, die zumindest teilweise innerhalb des Gehäuses (80) enthalten ist.

9. Verfahren nach Anspruch 8, ferner umfassend:
Schrauben einer Halterung (74) in die Mutter (88); und
Sichern der Mutter durch eine geradlinige Halterungsplatte (84), die mit der Mutter (88) und einer geradlinigen Öffnung (82) in dem Gehäuse (80) in Eingriff steht.

10. Verfahren nach Anspruch 9, ferner umfassend:
Festhalten der geradlinigen Halterungsplatte (84) und der Mutter (88) innerhalb der geradlinigen Öffnung (82) in dem Gehäuse (80) mit dem Deckblech (90).

11. Verfahren nach Anspruch 9 oder 10, ferner umfassend:
Anordnen mindestens einer aus der Vielzahl von Gehäuseerleichterungsöffnungen (98) angrenzend an die geradlinige Öffnung (82) in dem Gehäuse (80).

## Revendications

1. Mécanisme de serrage (72) comprenant :
un boîtier (80) avec une multitude d'ouvertures rectilignes (82) ;
une multitude de plaques éléments de fixation rectilignes (84), chacune avec une ouverture en forme d'écrou (86), chacune de ladite multitude de plaques éléments de fixation rectilignes (84) étant localisée dans une de ladite multitude d'ouvertures rectilignes (82) ; et
un élément de fixation (88) monté au moins partiellement à travers ladite ouverture en forme d'écrou (86) de chacune de ladite multitude de plaques éléments de fixation rectilignes (84) ;
**caractérisé en ce qu'**il comprend en outre :
une première feuille de face (92) et une seconde feuille de face (90) montées sur ledit boîtier (80) pour bloquer chacune de ladite multitude de plaques éléments de fixation rectilignes (84) entre elles ; et
une multitude d'ouvertures d'éclaircissement de boîtier (98) à travers ledit boîtier (80) et une multitude d'ouvertures d'éclaircissement de première feuille à travers ladite première feuille de face (92), ladite multitude d'ouvertures d'éclaircissement de boîtier (98) étant alignée avec ladite multitude d'ouvertures d'éclaircissement de première feuille.

2. Mécanisme de serrage selon la revendication 1, dans lequel ledit élément de fixation (88) est un écrou.

3. Mécanisme de serrage selon la revendication 2, dans lequel ledit élément de fixation (88) est un élément de fixation à douze points.

4. Mécanisme de serrage selon une quelconque revendication précédente, dans lequel chacune de ladite multitude de plaques éléments de fixation rectilignes (84) comprend un coin arrondi (84A) .

5. Mécanisme de serrage selon une quelconque revendication précédente, dans lequel chacune de ladite multitude de plaques éléments de fixation rectilignes (84) flotte dans l'une respective de ladite multitude d'ouvertures rectilignes (82).

6. Mécanisme de serrage selon une quelconque revendication précédente, dans lequel ladite seconde feuille de face (90) reçoit un rivet (100) accessible à travers au moins l'une de ladite multitude d'ouvertures d'éclaircissement de boîtier (98) et l'une respective de ladite multitude d'ouvertures d'éclaircissement de première feuille.

7. Procédé de fixation d'un mécanisme de serrage (72) à un carter (60) d'un moteur à turbine à gaz comprenant :
le positionnement d'un mécanisme de serrage (72) par rapport à un carter (60) avec un élément de fixation temporaire ;
le perçage d'un trou de rivet à travers le carter (60) et une feuille de face (90) montée sur un boîtier (80) du mécanisme de serrage (72) et sur le carter (60), le trou de rivet étant aligné avec au moins l'une d'une multitude d'ouvertures d'éclaircissement de boîtier (98) ; et
le rivetage du mécanisme de serrage (72) sur le carter (60).

8. Procédé selon la revendication 7, comprenant en outre :
la fixation d'une structure au carter (60) avec un élément de fixation (74) monté sur un écrou (88) contenu au moins partiellement dans le boîtier (80).

9. Procédé selon la revendication 8, comprenant en outre :
le vissage de l'élément de fixation (74) dans l'écrou (88) ; et
la retenue de l'écrou par une plaque élément de fixation rectiligne (84) en prise avec l'écrou (88) et une ouverture rectiligne (82) dans le boîtier (80).

10. Procédé selon la revendication 9, comprenant en outre :
le blocage de la plaque élément de fixation rectiligne (84) et de l'écrou (88) dans l'ouverture rectiligne (82) dans le boîtier (80) avec la feuille de face (90).

11. Procédé selon la revendication 9 ou 10, comprenant en outre :
la localisation d'au moins une de la multitude d'ouvertures d'éclaircissement de boîtier (98) de manière adjacente à l'ouverture rectiligne (82) dans le boîtier (80).
